# EUROPEAN PATENT SPECIFICATION

(11) **EP 0 475 502 B1**
(45) Date of publication and mention of the grant of the patent: **14.12.1994**
(21) Application number: 91202212.6
(22) Date of filing: 02.09.1991
(51) Int. Cl.: B60R 1/12, G02B 27/00

(54) **Head-up display**
Blickrichtungsanzeige
Dispositif d'affichage à tête-haute

(30) Priority: 12.09.1990 US 580971
(43) Date of publication of application: 18.03.1992
(73) Proprietor: GENERAL MOTORS CORPORATION, Detroit Michigan 48202 (US); DELCO ELECTRONICS CORPORATION (a Delaware corp.), Kokomo, Indiana 46902 (US)
(72) Inventor: Groves, Doyle Joseph, Kokomo, Indiana 46902 (US); Miller, Larry David, Rochester Hills, Michigan 48307 (US)
(74) Representative: Denton, Michael John

(56) References cited:
- DE-A- 3 720 848
- DE-B- 2 326 841
- FR-A- 1 027 527
- GB-A- 2 105 847

## Description

The present invention relates to a head-up display for use in a vehicle to provide a head-up display image of relevant vehicle information.

Head-up displays have long been used in airplanes to aid the pilot(s). The head-up display reflects information the pilot needs off a half-mirror or the windshield and projects that information at a distance in front of the plane so that the pilot does not have to look into the cockpit to see the information.

DE-A-2,326,841 discloses a head-up display device which is fitted above the instrument panel in the cockpit or flight deck of an aircraft and which, to remain compact, includes a light prism which acts to increase the size of the optical iris of the device.

DE-A-3,720,848 discloses a rear-view mirror having fitted therein a liquid crystal display.

More recently, head-up displays have been used in automotive applications in which the image is projected up and reflected off the front windshield of the vehicle to appear at a distance in front of the driver. In such cases the front windshield is used as a combiner, allowing the head-up display image to appear together with the view through the front windshield. With a head-up display in a vehicle, the driver does not have to adjust his/her eyes from the road to read information, such as vehicle speed, which is normally displayed in the vehicle instrument panel.

One limitation of head-up displays is the space required for the display source and optics. In the past, the display source and optics of the head-up display have been placed in or on the instrument panel. The difficulty in this placement of the display source and optics is that the instrument panel usually has very little space available for such systems.

Another limitation with head-up displays reflected off the front windshield is that the windshield, because of its shape, is an imperfect combiner. The result is that the reflected image often appears distorted. In addition, the image reflected off the front windshield is not very bright because normal windshield glass does not reflect a high percentage of light.

A further limitation of previous head-up displays is that they must be tailored to the specific vehicle model in which they are used, making their implementation in other models difficult and expensive.

The present invention seeks to provide a head-up display that does not compete for valuable space in the instrument panel and that preferably provides a bright image of vehicle information so that the vehicle driver does not have to adjust eye focus to view the image. The present invention also seeks to provide a head-up display which is easily adaptable to different model vehicles.

Accordingly, an aspect of the present invention provides a head-up display as specified in claim 1.

In a preferred embodiment, the display and optical components of a head-up display are housed in a self-contained interior rear-view mirror unit so that the components do not have to share room in the instrument panel with other components. Also included in this embodiment is a combiner or mirror so the projected image is bright and has minimal distortion. This embodiment thus can provide a rear-view mirror head-up display which is easily adaptable to different model vehicles.

In another implementation, an image creating means includes a vacuum fluorescent display for displaying information such as vehicle speed. Projecting means is also provided and includes first and second lenses, the first lens being a negative lens which creates a reduced size first virtual image of the vacuum fluorescent display and the second lens being a positive lens which magnifies and projects a second virtual image of the first virtual image. A fold mirror is preferably included between the first and second lenses to save space. Combining means comprising a partially silvered portion of the rear-view mirror which can reflect an image of the scene through the rear window of the car is provided to combine the reflected image with the image projected by the positive lens.

An embodiment of the present invention is described below, by way of illustration only, with reference to the accompanying drawings, in which:-
Figure 1 is an illustration showing an embodiment of head-up display fitted in an interior rear-view mirror unit;
Figure 2 is an example of a display for the head-up display of Figure 1;
Figure 3 is an illustration showing a second embodiment of rear-view mirror head-up display; and
Figure 4 is a schematic drawing showing the projected image of one of the head-up displays of Figures 1 and 3 in relation to the rear-view mirror unit and the operator's eye.

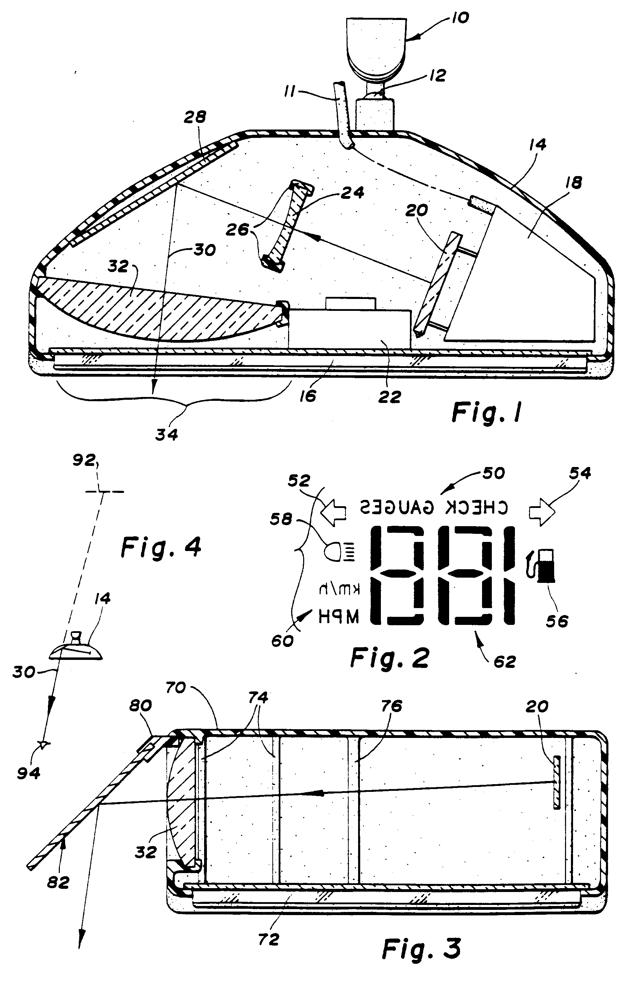

Referring to Figure 1, a rear-view mirror 16 is attached to a tailored housing 14 which houses the head-up display components, including a display driver circuit 18, an image source 20, a negative lens 24, a fold mirror 28, and a positive lens 32. The housing is attached to a conventional mount 10, which is attachable to the front windshield of the vehicle in conventional manner. The ball joint 12 is stiffer than conventional ball joints for rear-view mirrors to compensate for the additional weight of the head-up display components.

The housing 14 is moulded out of a plastics material and its rounded shape has been found not to interfere significantly with the vehicle operator's view through the front windshield.

The cable 11 provides electronic data signals for the display driver circuit 18. The cable 11 can be mounted along the perimeter of the front windshield (not shown), hidden by the interior trim of the vehicle (also not shown), and enters the housing 14 near the mirror mount 10. The data fed through cable 11 is of the conventional form used to drive conventional digital instrument panel displays. It may include, for example, data in digital form representative of the vehicle's speed.

Referring to Figure 2, the image source 20 (Figure 1) includes a digital speedometer 62, a gauge warning indicator 50, two turn signal indicators 52 and 54, a low fuel indicator 56, a high beam indicator 58, and a speedometer scale indicator 60.

Referring again to Figure 1, the cable 11 may be formed of eleven individual conductors for carrying a signal indicative of the ignition voltage, ground, a parking light dimming signal, a head-up display dimming signal, a low fuel signal, a "check gauges" signal, a right turn signal, a left turn signal, a high beam signal, an imperial/metric signal, and a serial vehicle speed signal. The serial speed signal may be in the form of a series of pulses in which, for example, 4000 pulses represent one mile.

The display driver circuit 18 uses these signals to drive the image source 20 (see also Figure 2) and is readily implemented by one skilled in the art. In order to obtain satisfactory display brightness, the image source 20 is preferably a vacuum fluorescent display.

Lens 24, attached to the housing 14 by brackets 26, projects a virtual image of the display 20. Preferably, lens 24 is a plano-concave lens with a focal length, f, of -50 mm. The lens 24 is placed substantially 50 mm in front of vacuum fluorescent display 20 and projects a half-size virtual image of the display 25 mm in front of the display. Although the plano-concave lens 24 is not necessary, it is preferred as it can reduce the amount of space required between the image source 20 and the magnifying lens 32. The image created by lens 24 is reflected off the fold mirror 28 and is then projected by lens 32. Since the fold mirror inverts the image, the image source 20 must generate an inverted image (see Figure 2) so that the projected data can be read in the normal manner by the vehicle operator. Fold mirror 28 acts to fold the optical path 30, thereby reducing the space required by the apparatus.

The lens 32 is preferably a plano-convex lens with a focal length of 150 mm. The plano-convex lens 32 projects a primary image, which is a magnified virtual image of the half-size virtual image formed by the lens 24. The primary image is projected so as to appear to be approximately 2 meters behind the lens 32, and about 2.5 meters from the position of the driver's eye, so as to appear to be floating above the front bumper of the vehicle. Figure 4 shows the projected primary image 92 appearing at a distance in front of the driver's eye 94 and the rear view mirror housing 14.

The rear-view mirror 16 is similar to a conventional mirror with the modification that the area in front of lens 32, designated by reference numeral 34, is only partially silvered, creating a half-mirror. The rest of mirror 16 is a complete mirror. Like conventional mirrors, the mirror 16 is adjustable for day and night viewing via a standard adjusting mechanism represented by box 22. It should be noted that although in the preferred implementation the mirror 16 is adjustable between two positions for day and night viewing, the housing 14 and the head-up display components therein do not move when the mirror 16 is adjusted. This prevents the head-up display image from moving outside of the driver's field of vision when the mirror 16 is adjusted.

Although the adjusting mechanism is not illustrated in detail in the drawing, it is of conventional form and is readily implemented by one skilled in the art. For example, the mirror 16 may be pivotably mounted to the housing 14 at the top such that the adjusting lever controls the position of the bottom of the mirror to change between day and night viewing.

Someone viewing the rear-view mirror head-up display will see the projected image in combination with scenery to the rear of the car reflected in the rear-view mirror. The partially silvered portion 34 of mirror 16 reflects both the rear scenery and allows the projected image to be viewed so that it appears to float in the reflected rear scenery.

The projected image is visible by the vehicle operator only as long as the field of vision of one of the operator's eyes includes the eyebox, or viewing window, which can be described as the outside bounds of the optical path leading through the lenses to the image source 20. For example, for a lens 32 formed from a round lens with a diameter of 105 mm and squared so that its vertical height is 51 mm, the viewing window is approximately 77.5 mm wide when the operator's eye is 500 mm from the rear-view mirror.

Care must be taken to assure that the optical path of the head-up display image falls within the optical path of the desired rear scenery reflected in the rear-view mirror. One satisfactory alignment for optical path 30 when passing through the mirror 16 in a system with the above-described parameters is seven degrees toward the vehicle operator from the orthogonal axis of the mirror 16. For different implementations, however, the most suitable optical path may be different.

In order to keep the weight of the above-described embodiment to a minimum, the optical components, including the lenses 32 and 24 and mirror 28, may be of a plastics material. More specifically, acrylic lenses are suggested. This improvement will, of course, reduce the amount of stress on ball joint 12.

A second embodiment of the head-up display is shown in Figure 3.

In the embodiment of Figure 3, the housing 70 for the head-up display system is rectangular in shape. The image source 20 provides the image to be projected by the single lens 32. In this embodiment, the rear-view mirror 72 itself is not used as a combiner, instead, a separate combiner 82 is mounted to the housing 70 via bracket 80. Combiner 82 combines the projected image with scenery through the front windshield of the vehicle instead of scenery reflected in the rear-view mirror. Baffles 74 and 76 provided on the bottom of housing 70 and being approximately 3 mm and 6 mm in height, respectively, prevent the appearance of double images, reflected off the interior surfaces of the housing. It should also be noted that with only one lens, the required distance between the image source 20 and the lens 32 is increased to achieve the same image size and eyebox as in the example illustrated in Figure 1.

As will be apparent to those skilled in the art, the lens system of the rear-view mirror head-up display may include lenses other than the plano-concave and plano-convex lenses and may also contain three or more lenses, depending on the desired system parameters.

## Claims

1. A rear-view mirror for a vehicle comprising a housing (14) mountable within the vehicle and including an aperture; a mirror element (16,72) mounted on the housing; display apparatus mounted in the housing and including a display source (20) and projecting means (32) for projecting a primary virtual image (92) of the display source (20) viewable through the aperture; and a partially reflective combiner element (16,82) adapted to combine the projected primary virtual image with an image reflected off or passing through the combiner element.

2. A rear-view mirror according to claim 1, wherein the display source (20) includes a vacuum fluorescent display.

3. A rear-view mirror according to claim 1 or 2, wherein the projecting means includes first and second lenses (24,32), the first lens (24) being a negative lens for producing a reduced size virtual image of the image from the display source, the second lens (32) being a positive lens for producing the primary image (92).

4. A rear-view mirror according to claim 3, wherein the first lens (24) is a plano-concave lens and the second lens (32) is a plano-convex lens.

5. A rear-view mirror according to any preceding claim, comprising a fold mirror (28) located in the optical path (30) between the display source and the partially reflective combiner element.

6. A rear-view mirror according to any preceding claim, wherein the partially reflective combiner element (16,82) is combined with the mirror element (16), which includes a portion adapted for use as an interior rear-view mirror (16) and a partially mirrored portion (34) for allowing the passage of the projected primary image (30) therethrough.

7. A rear-view mirror according to claim 6, wherein the interior rear-view mirror (16) is adjustable for day and night viewing, the projected primary image being substantially unaffected by such adjustment.

8. A rear-view mirror according to any preceding claim, wherein the housing is substantially rounded to the rear of the aperture.

9. A rear-view mirror according to any preceding claim, wherein the combiner element (16,82) is adapted to combine the projected primary virtual image with a view rearward or forward of the vehicle.

10. A rear-view mirror according to any preceding claim, wherein the projected primary virtual image is displayed such that a vehicle operator can view the projected primary virtual image without having to adjust eye focus significantly from the focus required during normal driving.

## Patentansprüche

1. Ein Rückspiegel für ein Fahrzeug mit einem Gehäuse (14), das innerhalb des Fahrzeugs anbringbar ist und eine Öffnung aufweist; einem Spiegelelement (16, 72), das auf dem Gehäuse angebracht ist; eine Anzeigevorrichtung, die im Gehäuse angebracht ist und eine Anzeigequelle (20) und Projektionsmittel (32) zur Projektion eines primären virtuellen Bilds (92) der Anzeigequelle (20) aufweist, das durch die Öffnung sichtbar ist; und einem teilweise reflektierenden Kombinationseinrichtungselement (16, 82), das so ausgebildet ist, daß es das projizierte primäre virtuelle Bild mit einem Bild kombiniert, das von dem Kombinationseinrichtungselement reflektiert wird oder durch dieses hindurch verläuft.

2. Ein Rückspiegel nach Anspruch 1,
worin die Anzeigequelle (20) eine vakuumfluoreszierende Anzeige einschließt.

3. Ein Rückspiegel nach Anspruch 1 oder 2,
worin das Projektionsmittel erste und zweite Linsen (24, 32) einschließt, wobei die erste Linse (24) eine negative Linse zur Erzeugung eines virtuellen Bilds reduzierter Größe des Bilds von der Anzeigequelle und die zweite Linse (32) eine positive Linse zur Erzeugung des primären Bilds (92) ist.

4. Ein Rückspiegel nach Anspruch 3,
worin die erste Linse (24) eine plan-konkave Linse und die zweite Linse (32) eine plan-konvexe Linse ist.

5. Ein Rückspiegel nach einem der vorhergehenden Ansprüche,
mit einem Faltspiegel (28), der im optischen Weg (30) zwischen der Anzeigequelle und dem teilweise reflektierenden Kombinationseinrichtungselement angeordnet ist.

6. Ein Rückspiegel nach einem der vorhergehenden Ansprüche,
worin das teilweise reflektierende Kombinationseinrichtungselement (16, 82) mit dem Spiegelelement (16) kombiniert ist, welches einen Abschnitt, der zur Verwendung als ein Innenrückspiegel (16) ausgebildet ist, und einen teilweise verspiegelten Abschnitt (34) einschließt, um den Durchgang des projizierten primären Bilds (30) dort hindurch zu erlauben.

7. Ein Rückspiegel nach Anspruch 6,
worin der Innenrückspiegel (16) für Tag- und Nachtsicht einstellbar ist, wobei das projizierte primäre Bild im wesentlichen durch eine derartige Einstellung unbeeinträchtigt ist.

8. Ein Rückspiegel nach einem der vorhergehenden Ansprüche,
worin das Gehäuse im wesentlichen zur Rückseite der Öffnung gerundet ist.

9. Ein Rückspiegel nach einem der vorhergehenden Ansprüche,
worin das Kombinationseinrichtungselement (16, 82) so ausgebildet ist, daß es das projizierte primäre virtuelle Bild mit einer Ansicht nach hinten oder nach vorn aus dem Fahrzeug kombiniert.

10. Ein Rückspiegel nach einem der vorhergehenden Ansprüche,
worin das projizierte primäre virtuelle Bild so angezeigt wird, daß ein Fahrzeugbediener das projizierte primäre virtuelle Bild betrachten kann, ohne seinen Augenfokus signifikant vom während des normalen Fahrens erforderlichen Fokus weg einstellen zu müssen.

## Revendications

1. Rétroviseur pour un véhicule comportant un boîtier (14) pouvant être monté à l'intérieur du véhicule et comportant une ouverture; un élément de miroir (16, 72) monté sur le boîtier; un dispositif d'affichage monté dans le boîtier et comportant une source d'affichage (20) et des moyens de projection (32) pour projeter une image virtuelle primaire (92) de la source d'affichage (20) pouvant être vue à travers l'ouverture; et un élément mélangeur (16, 82) à réflexion partielle apte à combiner l'image virtuelle primaire projetée avec une image réfléchie par l'élément mélangeur ou passant à travers celui-ci

2. Rétroviseur selon la revendication 1, dans lequel la source d'affichage (20) comporte un affichage par fluorescence.

3. Rétroviseur selon la revendication 1 ou 2, dans lequel les moyens de projection comportent des première et seconde lentilles (24, 32), la première lentille (24) étant une lentille négative pour produire une image virtuelle de taille réduite de l'image en provenance de la source d'affichage, la seconde lentille (32) étant une lentille positive pour produire l'image primaire (92).

4. Rétroviseur selon la revendication 3, dans lequel la première lentille (24) est une lentille plan concave et la seconde lentille (32) est une lentille plan convexe.

5. Rétroviseur selon l'une quelconque des revendications précédentes, comprenant un miroir pliant (28) situé dans le trajet optique (30) entre la source d'affichage et l'élément mélangeur à réflexion partielle.

6. Rétroviseur selon l'une quelconque des revendications précédentes, dans lequel l'élément mélangeur (16, 82) à réflexion partielle est combiné avec l'élément de miroir (16), qui comporte une partie adaptée pour être utilisée comme un rétroviseur intérieur (16) et une partie (34) partiellement argentée pour permettre le passage de l'image primaire projetée (30) à travers celui-ci.

7. Rétroviseur selon la revendication 6, dans lequel le rétroviseur intérieur (16) est réglable pour une vision de jour et de nuit, l'image primaire projetée étant sensiblement non affectée par un tel réglage.

8. Rétroviseur selon l'une quelconque des revendications précédentes, dans lequel le boîtier est sensiblement de forme arrondie vers l'arrière de l'ouverture.

9. Rétroviseur selon l'une quelconque des revendications précédentes, dans lequel l'élément mélangeur (16, 82) est apte à combiner l'image virtuelle primaire projetée avec une vue vers l'arrière ou vers l'avant du véhicule.

10. Rétroviseur selon l'une quelconque des revendications précédentes, dans lequel l'image virtuelle primaire projetée est affichée de telle sorte que l'opérateur du véhicule peut voir l'image virtuelle primaire projetée sans avoir à régler la distance focale de son oeil de manière significative par rapport à la distance focale nécessaire au cours de la conduite normale.
